# EUROPEAN PATENT SPECIFICATION

(11) **EP 1 494 978 B1**
(45) Date of publication and mention of the grant of the patent: **13.09.2006**
(21) Application number: 03720603.4
(22) Date of filing: 02.04.2003
(51) Int. Cl.: C03B 23/025, C03B 35/24

(54) **METHOD AND EQUIPMENT FOR BENDING AND TEMPERING OF GLASS SHEETS**
VERFAHREN UND VORRICHTUNG ZUM BIEGEN UND VORSPANNEN VON GLASSCHEIBEN
PROCEDE ET MATERIEL DE BOMBAGE ET DE TREMPAGE DE FEUILLES DE VERRE

(30) Priority: 03.04.2002 FI 20020632
(43) Date of publication of application: 12.01.2005
(73) Proprietor: Feracitas Oy, 33720 Tampere (FI)
(72) Inventor: NIKANDER, Risto, FIN-33720 Tampere (FI)
(74) Representative: Nieminen, Taisto Tapani
(86) International application number: PCT/FI2003/000252
(87) International publication number: WO 2003/082754

(56) References cited:
- EP-A1- 0 005 306
- WO-A1-96/12682
- US-A- 3 665 730
- US-A- 4 778 508
- US-A- 5 246 477
- US-A- 5 562 750
- PATENT ABSTRACTS OF JAPAN vol. 1995, no. 8 29 September 1995 & JP 07 126 026 A (ASAHI GLASS CO LTD) 16 May 1995

## Description

The invention relates to a method and an equipment for bending and tempering of a glass sheet, in which method the glass sheet is first heated up to the bending temperature in an oven while it is moved in the oven by transfer means like rotating rollers and after the bending temperature has been reached, it is transferred into a bending section, in which the glass sheet is allowed to bend on a special mould, before cooling for tempering.

Earlier this kind of method is known of US patent publication 3,338,695 , in which the glass sheet is conveyed by rollers from heating section into bending section over the bending ring all the time by means of rollers. The method includes larger diameter rollers, which can receive flat glass in the bending section. The rollers are deeply grooved in the locations, in which the ring mould is "embedded" below the top level of the rollers. When the glass sheet has been transferred over the larger rollers just above the ring mould, the roller frame of larger rollers is descended so that the hot glass sheet is located on the ring mould and it bends. The disadvantage of this method is, that while the glass sheet arrives onto larger rollers, these rollers are so few, that the glass sheet bends somewhat down due to the large roller distance. This causes optical distortions, which do not disappear in actual bending on the ring mould. Different ring moulds require variations into large rollers, at least on locations of the grooves, which reason leads into expensive rollers sets for different kinds of ring moulds.

Also from US patent publication 4,282,026 is known is vacuum lifter by which the flat glass is lifted up from rollers, transferred over the ring mould and dropped onto the ring mould. The disadvantage of this is, that the glass sheet is in contact with vacuum lifter and therefore the vacuum lifter, which would damage the glass sheet, has to be covered by ceramic, fibre .glass or other hot resistant material. Another disadvantage is detaching of the glass sheet from the vacuum lifter while the glass is laid down onto the ring mould. If the vacuum is stopped slowly, the glass sheet may hover sideways just before it loses contact with the lifter, as the friction disappears from between the lifter and the glass sheet. The glass sheet will not locate accurately on the ring mould. If the vacuum is eliminated quickly and changed into blow, the hot glass sheet drops quickly on the mould. This may easily cause excess sag in the central areas of the glass sheet, as there is no support in the middle of the glass sheet. This kind of lifter is not suitable for coated, selective glass sheets, as the easily damaged coating has to be on the top side of the glass sheets due to rollers underside.

Therefore, the problems has been, how to transfer the flat glass from rollers onto a ring mould so, that the surface of the glass sheet is not damaged and it will not be distorted and no optical faults will be induced on the glass sheet during the transfer. The object of the invention is to create a new reliable method by which the glass sheet can be transferred onto a ring mould, and a glass sheet bending and tempering oven for carrying out this method. This object is achieved by the method according to claim 1 and the glass sheet bending and tempering oven according to claim 10.

Preferred embodiments of the method of the invention are defined in the dependent claims.

The advantage of the invention is, that it provides reliable means to transfer hot glass sheets from rollers of a roller heart oven onto a ring mould without special tools. The rollers and ring mould can be ordinary tools and they do not require changes. The glass sheets can be transferred accurately in the correct position over the ring mould. The top side of the glass sheet is not touched during the transfer. The glass sheet is not subjected to unwanted distortions, optical faults nor surface scratches. The glass transfer can take place in the hot oven, at the glass bending temperature and with short change over time. The method is well suited for medium and high capacity serial production levels.

In the following the invention is described more in detail with reference to the drawings, in which
- Fig. 1: shows the principle of the oven, in which there is the transfer system according to the novel invention.
- Fig. 2: shows phase in the oven, in which the transfer of the glass over to the ring mould is taking place.
- Fig. 3: shows top view of Fig. 2, section A-A.
- Fig. 4: shows detail of holding jet over the last roller.
- Fig. 5: shows detail of lifting means for selective lifting of nozzles.
- Fig. 6: shows a way of novel invention performance, in which there is a roller supporting and transporting the glass.
- Fig. 7: shows detail of detail of Fig. 6 from above.
- Fig. 8: shows various equipment for stopping and guiding the glass.
- Fig. 9: shows cross section of glass stopper capable for horizontal adjustment.
- Fig. 10: shows a way of novel invention performance, in which the glass is supported from below by air pressure inside of the blowing chamber instead of nozzles.

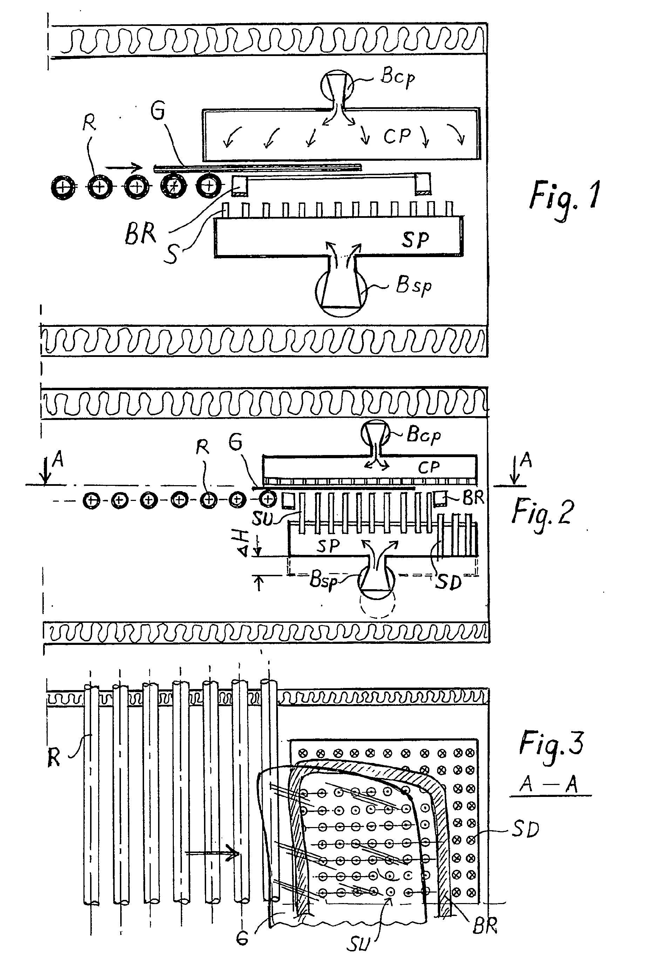

Fig. 1 is a schematic cross section of furnace, in which there is a conveyor path made of rollers, R. At the end of conveyor path there is a ring mould, BR, immediately after the last roller. The glass G is moving over the ring mould. As a moving member of the novel invention there is a blowing box SP furnished with nozzles, S and blower unit, Bsp. Above the ring mould there is a glass G lifting stop means, which includes air blowing box CP, the bottom side of which is a perforated plate or nozzles and blower unit Bcp. Both blowers blow hot air of the oven, as the subject section is a bending section.

Fig. 2 shows the glass transfer phase, in which the rollers R and especially the last roller still transfers the glass over the ring mould. When the glass G has sled into the area, where there are no more rollers, the glass support is achieved by air blowing. Out of movable nozzles, nozzles SU have been lifted above the chamber SP so that their top level is the same and just a little lower than the top level of the rollers. Also the highest point of the ring mould has to be below the roller level so that the glass will not hit the mould during the transfer. The unnecessary nozzles, SD are at low position and air is not blown through them. The blower Bsp has been adjusted so, that air flow through nozzles SU clearly can support the glass G.

Just about 2―5 mm above the glass there is glass lifting stop means. The blower Bcp causes quite small but sufficient air flow through the perforated plate towards the glass top surface so that it creates air film between the glass and perforated plate. Thus glass will never touch the perforated plate or tips of the nozzles. Rotation of rollers and especially the last roller keeps the glass moving so that it moves over the ring mould. The convey of glass during the last stage can be ensured by inclining counter surface CP down in direction of the glass travel or directing air jets in the direction of glass travel.

The ring mould is furnished by stoppers, which stop the glass onto the correct location.

When the glass has been stopped over the ring mould, the bottom side blowing is stopped so that the glass descends on to the ring mould BR. As the lower side unit SP, together with nozzles, can be lowered down by distance ΔH, so also by this movement the glass descends down onto the ring mould. At least the nozzles SU must be lowered down so that the glass can bend. Alternatively the whole unit SP is lowered or both, nozzles SU and unit Sp are lowered. After the bending the glass is processed further by press bending or it is just tempered.

Fig. 3 describes situation of Fig. 2 seen from above, just half of the oven is pictured. There are nozzles in larger area than required by the ring mould BR. Nozzles SU are open and blow air onto the glass. Nozzles SD are at lower position and are not supposed to blow air when used in connection of this ring mould.

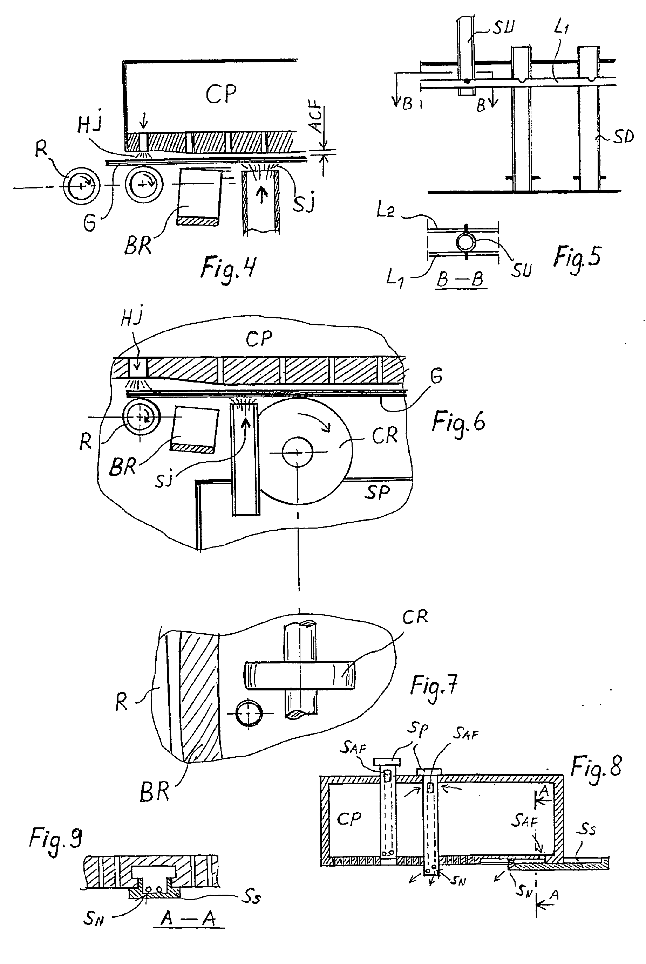

A special detail is shown in Fig. 4, in which a powerful air jet is blown over the last roller R so that it presses the glass against the roller so that the last rollers more securely move the glass as long as the edge of the glass passes the roller. The distance ACF between the glass G and perforated plate of glass lifting stop means CP, describes the thickness of air film between the said parts.

Fig. 5 shows another arrangement for lifting and descending the nozzles, in which nozzle rows include bars L1 and L2. The nozzles can be turned into the position so that bars fitted onto the nozzles hit slots and the nozzles lift up together with bars or they have been turned into position, in which they do not lift up with the bars.

Alternatively a separate template, located under the lower blowing box Sp can be used to lift up the nozzles. The lift able template lifts up via lifting bars only those nozzles, which are in the same position with the template. Template can be used to move the nozzles in up-or down position. The nozzles can also be numbered and equipped with actuators for the lifting purposes.

Figures 6 and 7 show arrangement, in which inside the ring mould BR there is one or more support rollers CR, which support the glass and which have been equipped with rotation arrangements. The roller CR can be used to secure the travel of the glass up to the stoppers. The roller CR descends together with blower unit for the duration of bending.

Fig. 8 shows another glass stopping arrangement, in which a pipe Sp can be pushed from top side chamber CP so, that its lower end comes down at least to the level, where the glass travels. This kind of stopper can be side guide or end stopper, against which glass hits. At the lower end of the stopper pipe Sp there are nozzles SN, from which air jets exit towards the glass and try to stop complete contact. Thus, when it functions as a side guide, it acts as completely frictionless guide and does not exert onto the glass force, which would hinder the glass movement. The air can enter into the pipe Sp through holes SAF.

Fig 8 shows a horizontally movable guide or stopper SS, which also includes air jets SN from its guiding or stopping surfaces towards the edge of the glass. Fig. 9 shows cross section of sliding arrangement, in which a groove, for example dovetail, fits the parts one to another thus allowing adjustment of the location of stopper or guide. The adjustment can be performed from outside of the oven by actuators, which include scale showing its position. Air jets soften the stopping of the glass or enable frictionless guiding of the glass.

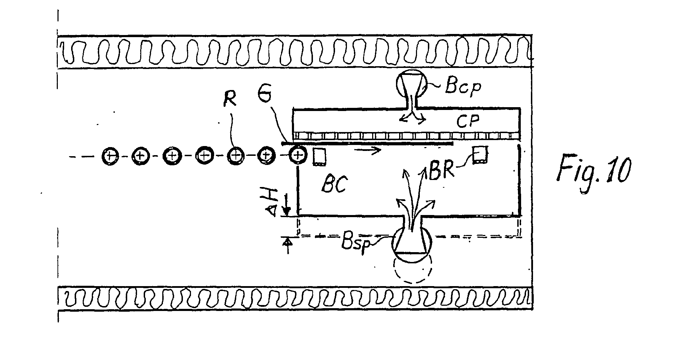

The arrangement of Fig. 10 achieves supporting blowing effect onto the glass G without nozzle arrangement by use of blowing box BC under the glass. The air flow from blower Bsp is directed onto underside of the glass and supporting effect on the glass is created immediately after the glass leaves the rollers R and enters into the area of the mould BR. This arrangement is advantageous, because the nozzles are not needed at all. Only the ring mould BR has to be changed when the glass type changes.

## Claims

1. A method for bending and tempering of a glass sheet (G), in which method the glass sheet is first heated in an oven to the bending temperature and moved over transfer means, like rotating rollers (R), and after the glass sheet has reached the bending temperature it is transferred into a bending section, in which the glass sheet (G) is allowed to bend on a special bending ring (BR), and the said transferring of the glass sheet onto the bending ring (BR) takes place by moving the glass sheet horizontally by a transfer force exerted on it, **characterized in that** when the glass sheet reaches the location of the bending ring (BR), the supporting of the glass sheet (G) by rollers from below is changed into an air flow supporting by directing air onto the bottom surface of the glass sheet, whereby the horizontal height level of the glass is maintained by a planar glass sheet elevation stop means (CP) above the glass sheet at the location of the bending ring (BR) and air is blown through the elevation stop means so that an air film is formed between the glass sheet and the glass sheet elevation stop means, said blowing preventing glass sheet elevation and avoiding touching of the glass sheet with the elevation stop means.

2. A method according to the claim 1 **characterized in that** the air blow onto the bottom surface of the glass sheet is provided through various nozzles (SU) arranged on the same level.

3. A method according to the claim 2 **characterized in that** the nozzles (SU) can be lowered down one by one or the whole nozzle chamber (SP) can be lowered to a down position.

4. A method according to the claim 1 **is known** in that the supporting effect on the glass sheet (G) is achieved by forming a chamber (BC) under the glass sheet which chamber has an open face towards the glass sheet and by directing an air flow towards the glass sheet from below.

5. A method according to the claim 1 **characterized in that** the glass elevation stop means (CP) is a perforated plate or nozzle plate and air is blown through the holes whereby the dynamic effect of this blowing is remarkably lower than the blow directed on the bottom surface of the glass sheet.

6. A method according to the claim 1 **characterized in that** the glass sheet is moved over the bending ring (BR) by a transfer force provided by the rollers (R).

7. A method according to the claim 1 **characterized in that** the glass sheet is transferred over the bending ring (BR) by a wheel (CR) located in the area of the bending ring and under the glass sheet.

8. A method according to the claim 1 **characterized in that** for transferring the glass sheet by the rollers (R), air jets are directed onto the top surface of the glass sheet so that they press the glass sheet down substantially on the location of the rollers (R) in order to improve the transfer effect.

9. A method according to the claim 1 **characterized in that** the entrance and stopping of the glass sheet over the bending ring (BR) is assisted by mechanical stoppers (Sp), (Ss), and out of their contact surfaces air is blown out against the edge of the glass sheet.

10. A glass sheet (G) bending and tempering oven including a glass sheet heating section for heating up the glass sheet to the bending temperature, a bending section and glass transfer means, like rotating rollers (R) over which the glass sheet at the bending temperature is transferred into the bending section, in which bending section a bending ring (BR) is located on which the glass sheet is allowed to bend before tempering, **characterized in that** for transferring the glass sheet onto the bending ring (BR), the equipment includes under the glass and at the location of the bending ring (BR), an air blowing system by which system the rollers (R), which are supporting the glass sheet, are substituted and for maintaining the horizontal heigt level of the glass sheet during the transfer said equipment includes planar glass sheet elevation stop means (CP) located above the glass sheet at the location of the bending ring (BR), which stop means further includes an air blowing arrangement (Bcp) with a perforated plate or a set of nozzles arranged in planar form so that an air film is formed between the glass sheet (G) and the glass sheet elevation stop means.

## Patentansprüche

1. Eine Methode der Biegung und des Härtens einer Glasscheibe, wo die Glasscheibe (G) zuerst in einem Ofen auf Biegetemperatur geheizt und auf Übertragungsmittel, wie rotierenden Rollen (R) bewegt wird, und wenn die Glasscheibe die Biegetemperatur erreicht hat, wird sie zu einer Biegeabteilung übertragen, wo die Glasscheibe (G) auf einem spezialen Biegering (BR) gebogen werden kann und, die genante Übertragung der Glasscheibe auf den Biegering (BR) mit auf ihr gerichteter Übertragungskraft geschieht, **gekennzeichnet dadurch, dass** wenn die Glasscheibe die Lage der Biegering (BR) erreicht hat, wird das Stützen der Glasscheibe (G) mit Rollen von unten zum Stützen mit Luftströmung, auf die Unterfläche der Glasscheibe gerichtet, wobei die horizontale Höhenstufe der Glasscheibe mit Sperranordnung (CP) des Steigens einer Flächenförmigen Glasscheibe oberhalb der Glasscheibe in der Lage des Biegerings (BR) instand halten wird, und Luft wird durch die Sperranordnung des Steigens geblasen, sodass sich eine Lufthaut zwischen der Glasscheibe und der Sperranordnung des Steigens der Glasscheibe bildet, weil genanntes blasen das Steigen der Glasscheibe hindert und vermeidet und Berührung der Glasscheibe mit den Sperranordnung vermeidet wird.

2. Eine Methode gemäss Anspruch 1 **gekennzeichnet dadurch, dass** Luft auf die Unterseite der Glasscheibe aufgetragen wird, mit, verschiedenen Düsen (SU), die auf gleiche Stufe angeordnet worden sind.

3. Eine Methode gemäss Anspruch 1 **gekennzeichnet dadurch, dass** die Düsen (SU) einzeln oder die ganze Düsenkammer in eine niedrige Lage herabgelassen werden können.

4. Eine Methode gemäss Anspruch 1 **gekennzeichnet dadurch, dass** der Stützende Effekt die Glasscheibe (G) erreichen kann, indem man eine Kammer (BC) unter der Glasscheibe bildet, welche Kammer eine offene Fläche gegen die Glasscheiben hat, und durch Richten eines Luftstroms gegen die Glasscheibe von unten.

5. Eine Methode gemäss Anspruch 1 **gekennzeichnet dadurch, dass** die, das Steigen der Glasscheibe stoppende Sperranordnung (CP), eine Lochplatte oder Düsenplatte ist, und Luft durch die Löcher geblasen wird, wobei der dynamische Effekt dieser Luftströmung wesentlich kleiner als der Effekt der Luftströmung, die von unten auf die untere Fläche der Glasscheibe gerichtet wird.

6. Eine Methode gemäss Anspruch 1 **gekennzeichnet dadurch, dass** die Glasscheibe auf dem Biegering (BR) mit Hilfe der Kraft von der Rollen (R) übertragen wird,

7. Eine Methode gemäss Anspruch 1 **gekennzeichnet dadurch, dass** die Glasscheibe auf den Biegering (BR) mit Hilfe eines, Rads (CR) unter der Glasscheibe auf den Gebiet des Biegerings übertragen wird.

8. Eine Methode gemäss Anspruch 1 **gekennzeichnet dadurch, dass** zur Übertragung der Glasscheibe mit Rollen (R), Wasserstrahlen auf die Oberfläche der Glasscheibe gerichtet werden, um an die Rollen die Glasscheibe nach unten zu drücken, und zwar um den Übertragungseffekt zu verbessern.

9. Eine Methode gemäss Anspruch 1 **gekennzeichnet dadurch, dass** das Gelangen und Sperren der Glasscheibe an die Rollen mit mechanischen Sperren (Sp), (Ss)gesteuert werden, mit Hilfe welchen aus den Kontaktflächen Luft gegen die Glaskante geblasen wird.

10. Ein Ofen für Biegen und Härten einer Glasscheibe (G), der Ofen bestehend aus einer Abteilung für Glasheizung, wo die Glasscheibe auf Biegetemperatur geheizt wird und aus, einer Biegeabteilung und Übertragungsmittel, wie Rollen (R) auf welchem die Glasscheibe bei Biegetemperatur in die Biegeabteilung übertragen wird, wo es einen Biegering (BR) gibt, auf dem die Glasscheibe bevor Härten biegen darf, **gekennzeichnet dadurch, dass** es, zur Übertragung der Glasscheibe auf den Biegering (BR), in die Ausrüstung an den Biegering unter dem Glas (BR) eine Luftblaseanordung gehört, mit dem die Glas ragenden Rollen ersetzt weden und, um die Höhenstufe während der Übertragung beizubehalten, enthält die Ausrüstung eine Sperranordnung (CP) auf der Glasscheibe an den Biegering (BR) und die Sperranordnung enthält auch eine Luftblaseanordung (Bcp) mit einem Lochplatte oder ein Satz Düsen in Flächenform, damit sich eine Lufthaut zwischen Glasscheibe (G) und Sperranordnung bildet.

## Revendications

1. Une méthode pour bomber et tremper une feuille de verre (G), dans laquelle méthode la feuille de verre est d'abord chauffée dans un four à la température de bombage et placée sur des moyens de transfert, rouleaux rotatifs (R) par exemple, et, après qu'elle ait atteint la température de courbage, la feuille de verre (G) est transférée dans une section de bombage dans laquelle il lui est permis de se bomber sur un moule (BR) spécial, et ledit transfert de la feuille de verre sur le moule (BR) s'effectue en déplaçant la feuille de verre horizontalement au moyen d'une force de transfert agissant sur elle, **caractérisée en ce que** les rouleaux de support de la feuille de verre (G), dès que la feuille arrive à la hauteur du moule (BR), sont remplacés par un flux d'air dirigé vers la surface inférieure de la feuille pour la supporter, et, pendant le transfert, la feuille est maintenue à la même hauteur à l'aide d'un moyen d'empêchement (CP) planaire aménagé au-dessus de la feuille au niveau du moule (BR), et de l'air est soufflé à travers ce moyen d'empêchement d'élévation de façon à créer une couche d'air entre la feuille de verre et ledit moyen d'empêchement d'élévation, ledit air soufflé empêchant la feuille de verre de monter et d'entrer en contact avec le moyen d'empêchement d'élévation.

2. Une méthode selon la revendication 1, **caractérisée en ce que** le jet d'air vers la surface inférieure de la feuille de verre est fournie à travers de différentes busettes (SU) aménagées au même niveau.

3. Une méthode selon la revendication 2, **caractérisée en ce que** les buses (SU) peuvent être baissées une à une ou tout le corps de busettes (SP) peut être descendu en bas.

4. Une méthode selon la revendication 1, **caractérisée en ce que** l'effet de support agissant sur la feuille de verre (G) est obtenu en formant une chambre (BC) sous la feuille de verre, ladite chambre ayant une face ouverte vers les feuilles de verre, et en dirigeant un flux d'air vers la feuille de verre de par en-dessous.

5. Une méthode selon la revendication 1, **caractérisée en ce que** le moyen d'empêchement (CP) d'élévation de la feuille de verre est une plaque perforée ou une plaque de busettes à travers les trous de laquelle s'effectue le soufflage de l'air, dont l'effet dynamique est considérablement plus petit que celui du jet dirigé vers la surface inférieure de la feuille de verre.

6. Une méthode selon la revendication 1, **caractérisée en ce que** la feuille de verre est amenée sur le moule (BP) au moyen d'une force de transfert fournie par les rouleaux (R).

7. Une méthode selon la revendication 1, **caractérisée en ce que**, la feuille de verre est transférée au-dessus du moule (BR) par une roue (CR) située dans la zone du moule et sous la feuille de verre.

8. Une méthode selon la revendication 1, **caractérisée en ce que**, pour le transfert de la feuille de verre par les rouleaux (R), des jets d'air sont dirigés vers la surface supérieure de la feuille de verre de façon à ce qu'ils appuient la feuille vers le bas essentiellement à la hauteur des rouleaux (R) afin d'améliorer l'effet de transfert.

9. Une méthode selon la revendication 1, **caractérisée en ce que** l'entrée et l'arrêt de la feuille de verre sur le moule (BR) sont assistés par des butées mécaniques (Sp), (Ss), et que l'air est soufflé de leurs surfaces de contact contre le bord de la feuille de verre.

10. Un four pour bomber et tremper des feuilles de verre comprenant une section de préchauffage pour chauffer la feuille de verre à la température de bombage, une section de bombage et un moyen de transfert, par exemple rouleaux rotatifs (R) sur lesquels la feuille de verre amenée à la températeur de bombage est transférée dans la section de bombage, dans laquelle section se trouve un moule (BR) sur lequel il est permis à la feuille de verre de se bomber avant d'être trempée, **caractérisée en ce qu'**en vue du transfert de la feuille de verre sur le moule (BR), l'équipement comprend un système de soufflage qui est situé sous le verre à la hauteur du moule (BR) et qui remplace les rouleaux (R) de support de la feuille de verre et maintient la feuille de verre à la même hauteur pendant le transfert, ledit équipement comprenant un moyen planaire (CP) qui empêche la feuille de verre de monter et qui est situé au-dessus de la feuille de verre à la hauteur du moule (BR), ledit moyen d'empêchement comprenant encore un système de soufflage (Bcp) consistant d'une plaque perforée ou de busettes aménagées à un même niveau planaire de façon à former une couche d'air entre la feuille de verre (G) et le moyen d'empêchement d'élévation de la feuille de verre.
